# EUROPEAN PATENT APPLICATION

(11) **EP 4 492 555 A1**
(43) Date of publication of application: **15.01.2025**
(21) Application number: 24731440.4
(22) Date of filing: 04.02.2024
(51) Int. Cl.: H01M 50/30, H01M 50/147, H01M 50/548

(54) **BATTERY**

(30) Priority: 24.05.2023 CN 202321280961 U
(71) Applicant: Eve Energy Co., Ltd., Huizhou, Guangdong 516006 (CN)
(72) Inventor: LIU, Liangliang, Huizhou, Guangdong 516006 (CN); ZHU, Yuan, Huizhou, Guangdong 516006 (CN); CAO, Lang, Huizhou, Guangdong 516006 (CN)
(74) Representative: Murgitroyd & Company
(86) International application number: PCT/CN2024/075718
(87) International publication number: WO 2024/120552

(57) **Abstract**

Disclosed herein is a battery comprising a shell (9) and a roll core (1) disposed within the shell, the shell (9) including a shell body (2) and an end cap component (3), one end of the shell body (2) being provided with an opening (22), another end of the shell body (2) being provided with a sealing portion (21), the opening (22) being plugged by the end cap component (3), the roll core (1) including a first tab (11) and a second tab (12), the end cap component (3) being provided with a pressure-relief structure (34), an outside wall of the sealing portion (21) being provided with a first terminal (4) and a second terminal (5) at intervals, the first terminal (4) and the second terminal (5) being insulatively disposed, the first tab (11) being connected to the first terminal (4), and the second tab (12) being connected to the second terminal (5).

## Description

This application claims priority to Chinese Patent Application No. 202321280961.3, filed with China National Intellectual Property Administration on May 24, 2023, the content of which is incorporated herein by reference in its entirety.

### TECHNICAL FIELD

The present application relates to the field of energy storage devices, for example, to a kind of battery.

### BACKGROUND

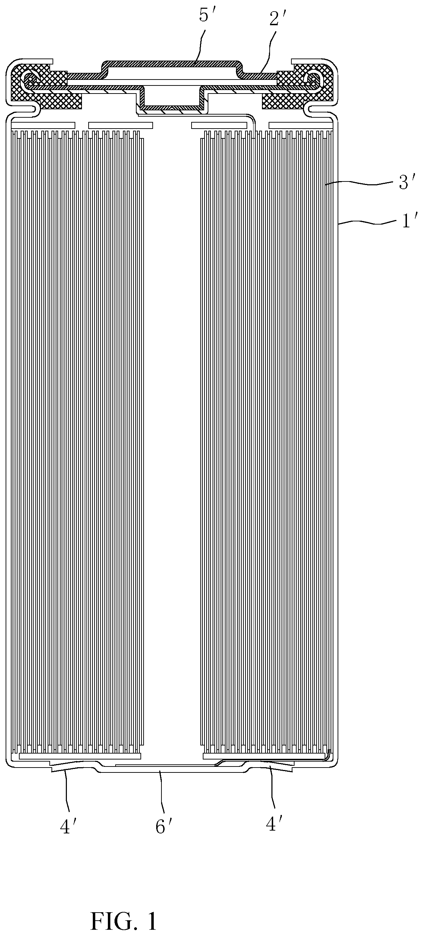

Referring to FIG. 1, a battery generally includes a battery shell 1', an end cap 2', and a roll core 3' wound of a positive electrode sheet, a negative electrode sheet, and a quarantine film spaced between the positive electrode sheet and the negative electrode sheet. The roll core 3' is fitted into the battery shell 1' which is filled with electrolyte, and then sealed by the end cap 2'.

In a battery, the positive electrode 5' and the negative electrode 6' of the roll core 3' are generally led out from both ends of the battery shell 1', respectively. The positive electrode 5' is a protruding pole, and the negative electrode 6' is the bottom plane of the battery shell 1'. However, the positive and negative electrodes of an electronic device (such as an e-cigarette) are generally aranged on a same plane. When the battery is connected to an electronic device, the positive electrode 5' or the negative electrode 6' at one end of the battery needs to be led to another end through wirings so as to connect to the electronic device, resulting in an inconvenient connection.

Moreover, an explosion-proof valve 4' of the battery is usually disposed at the bottom of the battery shell 1'. Due to the difficult to process the explosion-proof valve 4' at the bottom of the battery shell 1', the design accuracy error of the explosion-proof valve 4' is prone to be large, thus making the threshold of the explosion-proof valve 3' to be large, which will degrade the safety performance of the battery.

### SUMMARY

The present application provides a battery which has a simple structure, may improve the design accuracy of a pressure-relief structure, and has low difficulty in assembling the battery.

According to a first aspect, an embodiment of the present application provides a battery including a shell and a roll core disposed within the shell, the shell including a shell body and an end cap component, one end of the shell body being provided with an opening, another end of the shell body being provided with a sealing portion, the opening being plugged by the end cap component, the roll core including a first tab and a second tab, wherein a pressure-relief structure is disposed on the end cap component, a first terminal and a second terminal are disposed on an outer side wall of the sealing portion, the first tab is connected to the first terminal, and the second tab is connected to the second terminal.

In one embodiment, the end cap component includes a cover plate connected to the shell body and a first connecting piece disposed on one side of the cover plate, the cover plate plugging the opening, the first connecting piece being connected to the second tab, the cover plate including an arc-shaped protrusion and a first connecting portion disposed on an outer periphery of the arc-shaped protrusion, the first connecting portion being connected to the shell body, the arc-shaped protrusion protruding outwardly toward the first connecting piece and being connected to the first connecting piece, the pressure-relief structure including a plurality of explosion-proof notches disposed on the arc-shaped protrusion, the pressure-relief structure further including a number of pressure-relief holes disposed on the first connecting piece, the pressure-relief holes directly facing the arc-shaped protrusion.

In one embodiment, a thickness of the arc-shaped protrusion is less than a thickness of the first connecting portion.

In one embodiment, the end cap component further includes an insulating support member, the first connecting portion and the first connecting piece are spaced by the insulating support member disposed therebetween.

In one embodiment, the end cap component includes a cover plate connected to the shell body, the cover plate plugging the opening, and the pressure-relief structure includes a plurality of explosion-proof notches disposed on the cover plate.

In one embodiment, the sealing portion is provided with a first through-hole therethrough, the first terminal includes a first pole and a fixing block, a first end of the first pole being disposed inside the shell body and connected to the first tab, a second end of the first pole extending outside of the shell body through the first through-hole and being riveted to the fixing block, a portion of the first pole located within the shell body being provided with a boss in a circumferential direction, the boss and the fixing block abutting against opposite sides of the sealing portion, respectively.

In one embodiment, a center of the roll core is a hollow structure, and the first terminal is disposed in alignment with the hollow structure.

In one embodiment, the first terminal further includes a number of insulating seals, the insulating seals being provided between the first pole and the shell body, between the fixing block and the shell body, and between the boss and the shell body.

In one embodiment, the second terminal is disposed outside the shell body, and the second terminal is electrically connected to the second tab through the shell.

In one embodiment, the second terminal includes a second pole, a second connecting piece and a thermistor, the second connecting piece having one side connected to an edge of the sealing portion of the shell body and another side connected with the thermistor, the second pole being connected to the thermistor.

In one embodiment, both the second connecting piece and the thermistor are of an annular structure, and both the second tab and the thermistor are sleeved on an outer periphery of the first terminal.

In one embodiment, an outer side of the second connecting piece and an outer side of the thermistor are coated with an insulating piece, the insulating piece being provided with a second through-hole, one end of the second pole being connected to the thermistor, and another end of the second pole extending outside of the insulating piece through the second through-hole.

In one embodiment, the shell body is integrally stamped and formed.

An advantageous effect of the present application is that by arranging the pressure-relief structure on the end cap component, the internal pressure-relief of the battery may be carried out to ensure the use safety of the battery, meanwhile, the difficulty in processing the pressure-relief structure may be reduced, and the accuracy of the pressure-relief structure may be improved, thereby ensuring the safety performance of the battery. Moreover, the first terminal and the second terminal are both disposed on an end face of the battery away from the end cap component, so that the battery may be directly connected to an electronic device, and the connection is made in a convenient manner, thereby facilitating automatic assembly of the battery and the electronic device, improving assembly efficiency, meanwhile enabling avoidance of occupying the space of the end cap component, and facilitating more reasonable arrangement of the pressure-relief structure on the end cap component, thereby improving the pressure-relief effect of the battery.

### BRIEF DESCRIPTION OF THE DRAWINGS

FIG. 1 is a cross-sectional view of a cylindrical battery in the related art.
FIG. 2 is a cross-sectional view of a battery according to one embodiment of the present application.
FIG. 3 is a cross-sectional view of a battery according to another embodiment of the present application.
FIG. 4 is an end cap component according to one embodiment of the present application.

In FIG. 1:
1'. battery shell; 2'. end cap; 3'. roll core; 4'. explosion-proof valve; 5'. positive electrode; 6' negative electrode;

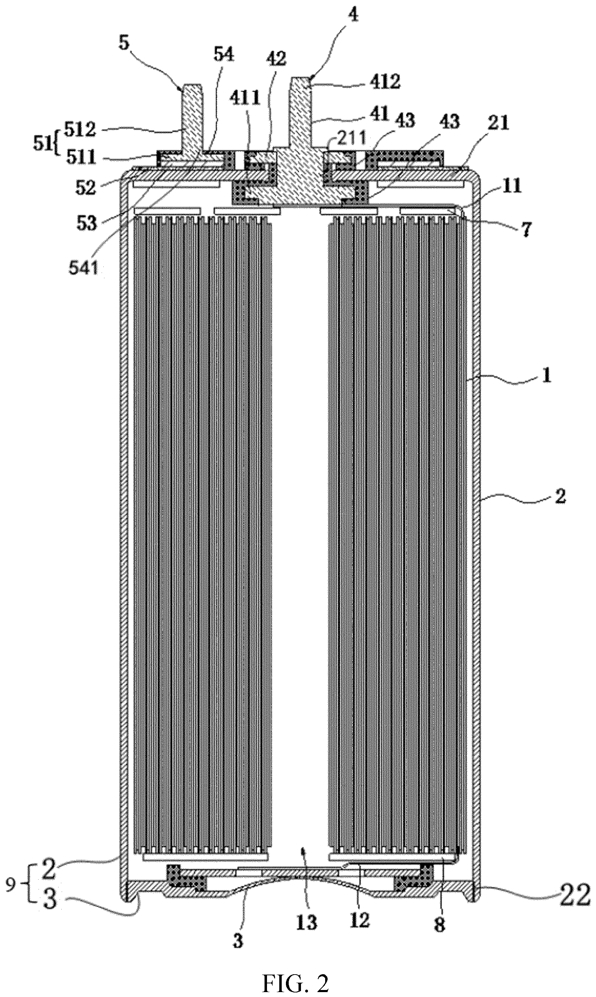

In FIGS. 2 to 4:
1. roll core; 11. first tab; 12. second tab; 13. hollow structure; 2. shell body; 21. sealing portion; 211. first through-hole; 22. opening; 3. end cap component; 31. cover plate; 311. first connecting portion; 312. arc-shaped protrusion; 32. first connecting piece; 321. pressure-relief hole; 33. insulating support member; 34. pressure-relief structure; 4. first terminal; 41. first pole; 411. boss; 412. first lead portion; 42. fixing block; 43. insulating seal; 5. second terminal; 51. second pole; 511. second connecting portion; 512. second lead portion; 52. second connecting piece; 53. thermistor; 54. insulating piece; 541. second through-hole; 6. explosion-proof notch; 7. first insulating sheet; 8. second insulating sheet; 9. shell.

### DETAILED DESCRIPTION

In the description of the present application, unless otherwise expressly specified and defined, the terms "connected to", "connected with", "fixed" are to be understood in a broad sense, for example, may be understood as a fixed connection, as a detachable connection, or as integrally formed; as a mechanical connection or an electrical connection; as directly connected or indirectly connected by means of an intermediate medium, as an internal communication of two elements or interaction of the two elements. The meanings of the above terms in the present application may be understood by one of ordinary skills in the art as the case may be.

Referring to FIG. 1, in a battery (e.g., a cylindrical battery) in the related art, the positive electrode 5' and the negative electrode 6' of the roll core 3' are generally led out from both ends of the battery shell 1', respectively, where the positive electrode 5' is a protruding pole and the negative electrode 6' is the bottom plane of the battery shell 1'. However, the positive electrode 5' and the negative electrode 6' of an electronic device (e.g., an e-cigarette) are generally arranged on a same plane. A circuit board of the e-cigarette is provided with a positive electrode pad and a negative electrode pad. When the battery is connected to the e-cigarette to supply power, the positive electrode 5' of the battery is connected to the positive electrode pad, and the negative electrode 6' of the battery is connected to the negative electrode pad. Yet, because the positive electrode 5' and the negative electrode 6' of the battery are respectively provided on two different end faces, one of the electrodes needs to be led to another end and connected to the circuit board through wirings. However, such a connection is not convenient and is not conducive to automatic assembly of the battery and the e-cigarette;

Moreover, in the battery, an explosion-proof valve 4' is generally formed by stamping an inner bottom surface of the battery shell 1' toward an outer surface of the bottom. Yet, because the battery shell 1' has a large depth, this increases the difficulty in processing the battery shell 1', which may easily cause the actual accuracy of the explosion-proof valve 4' to fail to meet design requirements.

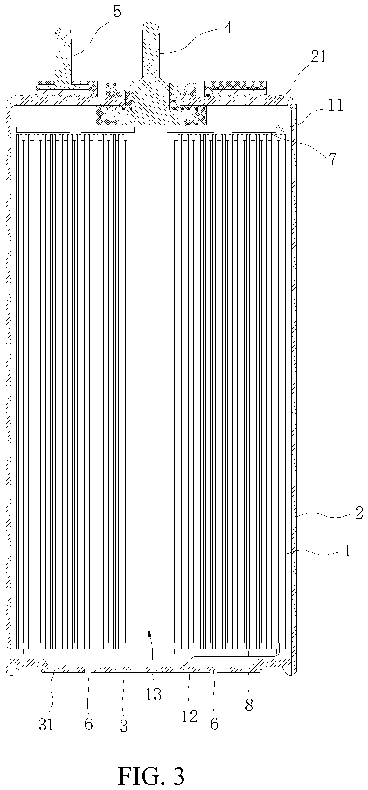

As shown in FIGS. 2 and 3, a battery according to the present invention includes a shell 9 and a roll core 1 disposed within the shell. The shell 9 includes a shell body 2 and an end cap component 3. One end of the shell body 2 is provided with an opening 22, and another end of the shell body 2 is provided with a sealing portion 21 for sealing. The opening 22 is plugged by the the end cap component 3. The roll core 1 includes a first tab 11 and a second tab 12. An outer side wall of the sealing portion 21 is provided with a first terminal 4 and a second terminal 5. The first tab 11 is connected to the first terminal 4, and the second tab 12 is connected to the second terminal 5.

One of the first tab 11 and the second tab 12 is a positive electrode tab, the other is a negative electrode tab, and one of the first terminal 4 and the second terminal 5 is a positive terminal and the other is a negative terminal. Both the positive terminal and the negative terminal are provided on a same end face of the battery, so that the battery may be directly connected to the electronic device, and the connection is made in a convenient manner, thereby facilitating automatic assembly of the battery and the electronic device, and improving assembly efficiency.

The end cap component 3 is provided with a pressure-relief structure 34. When the pressure inside the battery is too high, the pressure-relief structure 34 may exhaust and decompress the inside of the battery to ensure the use safety of the battery. Moreover, provision of the pressure-relief structure 34 on the end cap component 3 helps to reduce the difficulty in processing the pressure-relief structure to improve the accuracy of the pressure-relief structure 34, thereby ensuring the safety performance of the battery. Furthermore, provision of the positive terminal and the negative terminal on the outer side wall of the sealing portion 21 may avoid occupying the space of the end cap component 3, which helps to more reasonably provide the pressure-relief structure 34 on the end cap component 3, so as to improve the pressure-relief effect of the battery.

Alternatively, the battery is a cylindrical battery. Of course, the battery may have a square shape or the like.

Alternatively, as shown in FIGS. 2 and 3, the sealing portion 21 is provided with a first through-hole 211 therethrough. The first terminal 4 includes a first pole 41 and a fixing block 42. A first end of the first pole 41 is provided inside the shell body 2 and is connected to the first tab 11, and a second end of the first pole 41 extends outside of the shell body 2 through the first through-hole 211 and is connected to the fixing block 42. A portion of the first pole 41 located within the shell body 2 is provided with a boss 411 in a circumferential direction. The boss 411 and the fixing block 42 may abut against opposite sides of the sealing portion 21, respectively, to fix the first pole 41 to the shell body 2.

The first terminal 4 further includes a number of insulating seals 43 provided between the first pole 41 and the shell body 2, between the fixing block 42 and the shell body 2, and between the boss 411 and the shell body 2. The insulating seal 43 may isolate the first terminal 4 from the shell body 2 so as to avoid a short circuit, and may seal the gap between the first terminal 4 and the shell body 2 to ensure the sealing performance of the battery.

By way of example, the insulating seal 43 is made of a plastic material. The insulating seal 43 may be sealed between the first terminal 4 and the shell body 2 by injection molding while keeping the fixing block 42 and the first pole 41 connected.

Alternatively, the first pole 41 is riveted with the fixing block 42 to improve the effect of the fixing block 42 abutting against the first pole 41.

Alternatively, in order to improve the structural strength of the shell 9, the shell body 2 is integrally stamped and formed from a sheet material.

The first pole 41 is welded to the first tab 11. By way of example, the first pole 41 and the first tab 11 are welded by resistance welding, spot welding or laser welding. In order to ensure successful welding of the first pole 41 and the first tab 11, the first through-hole 211 is provided at a center of an end face of the shell body 2 away from the end cap component 3, so that the first terminal 4 is located at the center of the end face of the shell body 2 away from the end cap component 3. The first tab 11 is welded to a bottom end face of the first pole 41 by bending and extending to the bottom end face of the first pole 41. The roll core 1 is wound into a cylindrical shape, with the center of the roll core 1 being a hollow structure 13. The first terminal 4 directly faces the hollow structure 13. The hollow structure 13 of the roll core 1 may facilitate avoidance during welding, so that the first tab 11 and the first terminal 4 at the bottom of the shell body 2 may be welded through the hollow structure 13.

A first insulating sheet 7 is provided between the roll core 1 and an inner side wall of the sealing portion 21 to avoid a short circuit. The first tab 11 is led out from an end face of the roll core 1 adjacent to the first pole 41 and passes through the first insulating sheet 7 for bending, and is connected to the first pole 41 after being bent.

Alternatively, the second terminal 5 is provided on an outer side of the shell body 2, and the second terminal 5 is located on one side of the first terminal 4. The second terminal 5 may be directly connected to the shell body 2 on the outer side of the shell body 2 so as to be electrically connected to the shell 9, where the second tab 12 is connected to the shell 9, and the second terminal 5 may be electrically connected to the second tab 12 through the shell 9. This design helps to reduce the installation difficulty of the second terminal 5.

By way of example, the second terminal 5 includes a second pole 51, a second connecting piece 52, and a thermistor 53. One side of the second connecting piece 52 is connected to an edge of the sealing portion 21, and another side of the second connecting piece 52 is connected with the thermistor 53. The second pole 51 is connected to the thermistor 53. The second pole 51 may be electrically connected to the shell 9 through the thermistor 53 and the second connecting piece 52. The thermistor 53 is a positive temperature coefficient thermistor (PTC). With the increase of voltage and current, the temperature of the thermistor 53 is continuously increased, and the resistance value thereof is increased with the increase of temperature. When the resistance value of the thermistor 53 reaches a threshold, the electrical connection between the battery and the outside is cut off, thereby realizing over-voltage power-off protection of the battery.

Alternatively, each of the second connecting piece 52 and the thermistor 53 has an annular structure, and the second connecting piece 52 and the thermistor 53 are sleeved on an outer periphery of the first terminal 4 at intervals, respectively, and the second terminal 5 is connected to a portion of the thermistor 53. This design may increase the over-current area of the thermistor 53, reduce the resistance value of the thermistor 53, and help control the resistance threshold of the thermistor 53 to improve the protection effect of the thermistor 53.

Alternatively, a first lead portion 412 is provided at one end of the first pole 41 riveted with the fixing block 42. The second pole 51 includes a connected second connecting portion 511 and a second lead portion 512. The second connecting portion 511 is connected to the thermistor 53. The second lead portion 512 protrudes away from the thermistor 53. The battery may be directly plugged and connected to the electronic device through the first lead portion 412 and the second lead portion 512, thereby further improving the assembly efficiency of the battery and the electronic device, and facilitating the replacement of the battery.

An outer side of the second connecting piece 52 and the thermistor 53 are coated with an insulating piece 54 which is provided with a second through-hole 541. The second connecting portion 511 of the second pole 51 is connected to the thermistor 53. The second lead portion 512 extends outside of the insulating piece 54 through the second through-hole 541. The insulating piece 54 may insulate and isolate the second connecting piece 52, the thermistor 53, and the second connecting portion 511 to avoid a short circuit or current leakage.

By way of example, for ease of assembly, the second connecting piece 52 is welded to the shell body 2. The insulating piece 54 is made of a plastic material. The insulating piece 54 may coat and fix the thermistor 53 and the second pole 51 on the second connecting piece 52 through injection molding.

In an alternative embodiment, as shown in FIG. 3, the end cap component 3 includes a cover plate 31 connected to the shell body 2. The cover plate 31 plugs the opening 22 of the shell body 2. The pressure-relief structure 34 includes a plurality of explosion-proof notches 6 provided on the cover plate 31. When the internal pressure of the battery is too high, the pressure and heat may be released through the explosion-proof notches 6, thereby avoiding expansion deformation and thermal runaway of the battery.

The shell body 2 and the cover plate 31 are welded and connected. The cover plate 31 is connected to the second tab 12. The shell may be electrically connected to the second tab 12 so that the second terminal 5 is electrically connected to the second tab 12.

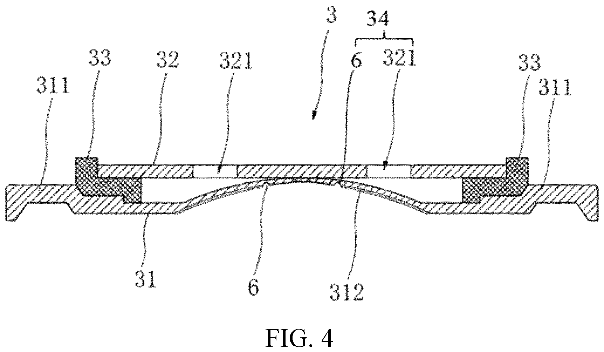

In another alternative embodiment, as shown in FIGS. 2 and 4, the end cap component 3 includes a cover plate 31 that plugs the opening 22 of the shell body 2, and a first connecting piece 32 that is provided on one side of the cover plate 31 and is connected to the second tab 12. The cover plate 31 includes an arc-shaped protrusion 312 and a first connecting portion 311 that is provided on an outer periphery of the arc-shaped protrusion 312. The first connecting portion 311 is connected to the shell body 2. The arc-shaped protrusion 312 protrudes outwardly toward the first connecting piece 32 and is connected to the first connecting piece 32, thereby enabling the second tab 12 to be electrically connected to the end cap component 3.

The pressure-relief structure 34 includes a plurality of explosion-proof notches 6 provided on the arc-shaped protrusion 312 and a number of pressure-relief holes 321 provided on the first connecting piece 32. The pressure-relief holes 321 directly faces the arc-shaped protrusion 312. At the time of pressure-relief, gas may flow through the pressure-relief holes 321 to the explosion-proof notches 6 on the arc-shaped protrusion 312, and the explosion-proof notches 6 may release the pressure inside the battery to ensure the safety of use of the battery. At the same time, the explosion-proof notches 6 may also form thinned points on the arc-shaped protrusion 312, which may automatically fuse for circuit break protection when the current is excessively high.

Alternatively, a thickness of the arc-shaped protrusion 312 is smaller than a thickness of the first connecting portion 311. The thinned arc-shaped protrusions 312 further contribute to pressure-relief and fusing to improve pressure-relief capacity and fuse protection.

The end cap component 3 further includes an insulating support member 33. The first connecting portion 311 and the first connecting piece 32 are spaced by the insulating support member 33 disposed therebetween. The insulating support member 33 is located at an outer edge of the first connecting piece 32, and may support the first connecting piece 32, so that not only the first connecting piece 32 may be prevented from swinging to ensure the connection stability of the first connecting piece 32 and the second tab 12, but also the first connecting piece 32 and the first connecting part 311 may be insulated and isolated to avoid a short circuit.

By way of example, the insulating support member 33 is made of a plastic material.

A second insulating sheet 8 is provided between the end cap component 3 and the roll core 1 to avoid a short circuit. The second tab 12 is led out from an end face of the roll core 1 adjacent to the end cap component 3 and passes through the second insulating sheet 8 for banding, and is welded to the first connecting sheet 32 after being bent.

Referring to FIG. 1, the battery in the related art generally uses an aluminum-plastic film as a battery shell 1'. That is, the battery is a soft-packed battery. But the aluminum-plastic film is prone to be deformed, so that the soft-packed battery is prone to be expanded and deformed. Thus, a space for expansion needs to be reserved inside the soft-packed battery. Yet the battery shell 1' also needs to be provided with an edge wrapping structure to cooperate with the end cap 2' to ensure stability and sealability of the package structure, but this reduces utilization rate inside the soft-packed battery and specific capacity of the soft-packed battery.

The battery is a hard-packed battery, and the shell of the battery may be made of steel or aluminum. Compared with a soft-packed battery, this design has a large hardness and rigidity of the battery shell, contributes to reducing the difficulty in manufacturing and assembling the shell, and reduces the risk of welding leakage. The connection stability of the shell body 2 and the end cap component 3 may be ensured without designing the edge wrapping structure, thereby ensuring the sealing performance of the battery. Meanwhile, the availability of the space inside the shell may be improved, so that more space may be used to absorb the expansion of the battery or the specific capacity of the battery may be improved.

Alternatively, the shell is made of aluminum metal or aluminum alloy.

The battery assembly process of the present application includes the following steps:
Step S100: Mounting a first terminal 4 to a first through-hole of a shell body 2;
Step S200: Passing an end of a first tab 11 away from a roll core 1 through a first insulating sheet 7, and bending a portion of the first tab 11 passing through the first insulating sheet 7;
Step S300: Mounting the first insulating sheet 7 and the roll core 1 into the shell body 2 after bending so that the bent portion of the first tab 11 abuts against the first terminal 4, and welding the first tab 11 and the first terminal 4;
Step S400: Welding an end cap component 3 to a second tab 12;
Step S500: Sealing and welding the end cap component 3 the shell body 2 after electrolyte is injected;
Step S600: Welding a second terminal 5 on an end face of the shell body 2 away from the end cap component 3 to complete assembly.

In the description herein, it should be understood that the terms "upper", "lower", "left", "right", etc. are based on the orientation or positional relationship shown in the drawings, and are intended only for convenience of description and simplification of operation, and do not indicate or imply that the device or element referred to must have a particular orientation, be constructed and operated in a particular orientation, and therefore cannot be construed as a limitation of the present application. In addition, the terms "first" and "second" are only used to distinguish between descriptions and have no special meanings.

In the description of this specification, reference to the terms "an embodiment", "example", etc. means that a feature, structure, material or characteristic described in connection with the embodiment or example is included in at least one embodiment or example of the application. In this specification, schematic representations of the above terms do not necessarily refer to a same embodiment or example.

## Claims

1. A battery comprising a shell and a roll core disposed within the shell, the shell including a shell body and an end cap component, one end of the shell body being provided with an opening, another end of the shell body being provided with a sealing portion, the opening being plugged by the end cap component, the roll core including a first tab and a second tab,
wherein a pressure-relief structure is disposed on the end cap component, a first terminal and a second terminal are disposed at intervals on an outer side wall of the sealing portion, the first terminal and the second terminal are insulatively disposed, the first tab is connected to the first terminal, and the second tab is connected to the second terminal.

2. The battery of claim 1, wherein the end cap component includes a cover plate connected to the shell body and a first connecting piece disposed on one side of the cover plate, the cover plate plugging the opening, the first connecting piece being connected to the second tab, the cover plate including an arc-shaped protrusion and a first connecting portion disposed on an outer periphery of the arc-shaped protrusion, the first connecting portion being connected to the shell body, the arc-shaped protrusion protruding outwardly toward the first connecting piece and being connected to the first connecting piece, the pressure-relief structure including a plurality of explosion-proof notches disposed on the arc-shaped protrusion, the pressure-relief structure further including a number of pressure-relief holes disposed on the first connecting piece, the pressure-relief holes directly facing the arc-shaped protrusion.

3. The battery of claim 2, wherein a thickness of the arc-shaped protrusion is smaller than a thickness of the first connecting portion.

4. The battery of claim 2, wherein the end cap component further includes an insulating support member, the first connecting portion and the first connecting piece being spaced by the insulating support member disposed therebetween.

5. The battery of claim 1, wherein the end cap component includes a cover plate connected to the shell body, the cover plate plugging the opening, and the pressure-relief structure including a plurality of explosion-proof notches disposed on the cover plate.

6. The battery of any one of claims 1 to 5, wherein the sealing portion is provided with a first through-hole therethrough, the first terminal includes a first pole and a fixing block, a first end of the first pole being disposed inside the shell body and connected to the first tab, a second end of the first pole extending outside of the shell body through the first through-hole and being riveted to the fixing block, a portion of the first pole located within the shell body being provided with a boss in a circumferential direction, the boss and the fixing block abutting against opposite sides of the sealing portion, respectively.

7. The battery of claim 6, wherein a center of the roll core is a hollow structure, and the first terminal is disposed in alignment with the hollow structure.

8. The battery of claim 6, wherein the first terminal further includes a number of insulating seals, the insulating seals being provided between the first pole and the shell body, between the fixing block and the shell body, and between the boss and the shell body.

9. The battery of claim 7, wherein the second terminal is disposed outside an open end of the shell body, and the second terminal is electrically connected to the second tab through the shell.

10. The battery of claim 9, wherein the second terminal includes a second pole, a second connecting piece and a thermistor, the second connecting piece having one side connected to an edge of the sealing portion and another side connected with the thermistor, the second pole being connected to the thermistor.

11. The battery of claim 10, wherein both the second connecting piece and the thermistor are of an annular structure, and both the second tab and the thermistor are sleeved on an outer periphery of the first terminal.

12. The battery of claim 11, wherein an outer side of the second connecting piece and an outer side of the thermistor are coated with an insulating piece, the insulating piece being provided with a second through-hole, one end of the second pole being connected to the thermistor, and another end of the second pole extending outside of the insulating piece through the second through-hole.

13. The battery of any one of claims 1 to 5, wherein the shell body is integrally stamped and formed.
